# EUROPÄISCHE PATENTSCHRIFT

(11) **EP 2 624 706 B1**
(45) Veröffentlichungstag und Bekanntmachung des Hinweises auf die Patenterteilung: **20.08.2014**
(21) Anmeldenummer: 11767916.7
(22) Anmeldetag: 14.09.2011
(51) Int. Cl.: A23J 1/14, C13B 20/00

(54) **KOLLOIDPRODUKT, VERFAHREN ZU DESSEN HERSTELLUNG UND VERWENDUNG DESSELBEN**
COLLOID PRODUCT, METHOD FOR PRODUCING SAME AND USE THEREOF
Produit colloïdal, procede de fabrication et utilisation dudit produit colloïdal

(30) Priorität: 22.11.2010 DE 102010051879; 08.10.2010 DE 102010047995
(43) Veröffentlichungstag der Anmeldung: 14.08.2013
(73) Patentinhaber: Südzucker Aktiengesellschaft Mannheim/Ochsenfurt, 68165 Mannheim (DE)
(72) Erfinder: AJDARI RAD, Mohsen, 67551 Worms (DE); FRENZEL, Stefan, 69469 Weinheim (DE)
(74) Vertreter: Schrell, Andreas
(86) Internationale Anmeldenummer: PCT/EP2011/004609
(87) Internationale Veröffentlichungsnummer: WO 2012/045388

(56) Entgegenhaltungen:
- EP-A1- 0 073 844
- WO-A1-2005/042787
- DE-A1-102006 004 103
- DE-A1-102007 003 463

## Beschreibung

Die vorliegende Erfindung betrifft ein Verfahren zur Herstellung eines Formkörpers einer eiweißhaltigen Fraktion aus Zuckerrüben-Rohsaft, die mittels dieses Verfahrens hergestellten Formkörper selbst sowie deren Verwendung für die Silierung, als Tierfuttermittel, als Fermentationsmedium, als Verbrennungshilfsmittel, als Brennstoff, als Bodenverbesserer oder Düngemittel.

Herkömmlicherweise wird Zucker aus Rüben gewonnen, indem die geernteten Rüben zunächst gereinigt werden, wobei sie von einem Großteil der noch anhaftenden Erde sowie von Blattresten befreit werden. Nach Passieren einer Wäsche werden die Rüben durch Schneidemaschinen zu bleistiftstarken Schnitzeln gehobelt. Aus den Schnitzeln erfolgt die Zuckergewinnung durch Gegenstrom-Extraktion unter Verwendung von heißem, leicht angesäuertem Wasser. Durch das Ansäuern der Extraktionsflüssigkeit wird die Filtration des Zuckerrüben-Rohsaftes sowie die Abpressbarkeit der extrahierten Schnitzel begünstigt. Der bei der Extraktion gewonnene Zuckerrüben-Rohsaft wird anschließend einer Extraktreinigung zugeführt. Üblicherweise erfolgt die Extraktreinigung mit Hilfe der sogenannten Kalk-Kohlensäure-Extraktreinigung in Form einer Vorkalkung und Hauptkalkung sowie einer ersten und zweiten Carbonatation und der Abtrennung des Niederschlages nach der ersten und zweiten Carbonatation. Die Extraktreinigung hat die Aufgabe, die im Zuckerrüben-Rohsaft enthaltenen Nicht-Saccharosestoffe, insbesondere hochmolekulare Stoffe, weitestgehend zu entfernen. Die zu entfernenden Nicht-Saccharosestoffe sollen dabei möglichst nicht abgebaut werden, so dass keine zusätzlichen niedermolekularen Stoffe in den Extrakt oder Zuckerrüben-Rohsaft gelangen.

In der Vorkalkung wird der Zuckerrüben-Rohsaft unter schonenden Bedingungen schrittweise durch Zugabe von Kalkmilch alkalisiert. Die Vorkalkung erfolgt unter Zugabe definierter Mengen an Calciumhydroxid (Kalkmilch). Infolge der Alkalisierung des Zuckerrüben-Rohsaftes kommt es zu einer Neutralisierung der im Extrakt vorhandenen organischen und anorganischen Säuren sowie zu Ausfällungsreaktionen der Anionen, die mit Calcium unlösliche oder schwer lösliche Salze bilden. So werden beispielsweise Phosphat, Oxalat, Citrat und Sulfat weitestgehend abgeschieden. Darüber hinaus koagulieren kolloidal gelöste Nicht-Saccharosestoffen und werden ausgefällt. Die Ausfällung einzelner Inhaltsstoffe, beispielsweise von Anionen wie Oxalat, Phosphat, Citrat, Sulfat oder von Kolloiden wie Pektin und Eiweißstoffen, erfolgt innerhalb bestimmter pH-Bereiche. Innerhalb dieser pH-Bereiche findet gleichzeitig eine Verdichtung des Niederschlages statt. Durch die Zugabe von Kalkmilch während der Vorkalkung kommt es auch zu einer Koagulation von Proteinen. Aufgrund dieses Proteingehalts werden die vorgenannten abgetrennten Nicht-Saccharose-Stoffe auch als eiweißhaltige Fraktion aus Zuckerrüben-Rohsaft bezeichnet.

Die Aufgabe der anschließend durchgeführten Hauptkalkung durch Zugabe von Kalkmilch besteht insbesondere im chemischen Abbau von Invertzucker und Säureamiden, der andernfalls im Bereich der Safteindickung unter Bildung von Säuren ablaufen würde. Die in der Hauptkalkung zugesetzte Kalkmilch spielt auch bei der ersten und zweiten Carbonatation eine große Rolle. Durch Umsetzung zu Calciumcarbonat wird ein starkes Adsorptionsmittel für eine Reihe löslicher Nicht-Saccharosestoffe und auch ein geeignetes Filterhilfsmittel bereitgestellt. Die im Hauptkalkungsprozess nicht verbrauchte Kalkmilch wird durch Einleiten von Kohlendioxid als Carbonatationsgas in den beiden Carbonatationsschritten zu Calciumcarbonat umgesetzt. Die Carbonatation erfolgt in zwei Stufen. Bei der ersten Carbonatation werden die ausgefällten und ausgeflockten Nicht-Saccharosestoffe und ein Teil der im Zuckerrüben-Rohsaft enthaltenen Farbstoffe adsorbtiv an das gebildete Calciumcarbonat gebunden. Der in der ersten Carbonatation erhaltene sogenannte erste Schlammsaft wird filtriert oder über Dekanteure geleitet und dabei zu Schlammsaftkonzentrat eingedickt. In der anschließenden zweiten Carbonatation entsteht der sogenannte zweite Schlammsaft, welcher ebenfalls filtriert und dabei eingedickt wird. Die in der ersten und zweiten Carbonation aufkonzentrierten Calciumcarbonat-Schlämme (Schlammsaftkonzentrate) werden üblicherweise vereinigt und abgepresst. Dabei entsteht der sogenannte Carbokalk. Dieser Carbokalk ist ein lagerfähiges Produkt mit einem Trockensubstanzgehalt von mehr als 70 %. Der in der Extraktreinigung gereinigte Zuckerrüben-Rohsaft wird weiterbehandelt und Weißzucker erhalten.

Ein erheblicher Nachteil der herkömmlichen Kalk-Kohlensäure-Extraktreinigung besteht insbesondere darin, dass nur ein relativ geringer Reinigungseffekt erreicht wird, da nur maximal 40 % aller Nicht-Saccharosestoffe aus dem Zuckerrüben-Rohsaft entfernt werden. Ein weiterer Nachteil besteht darin, dass das Verfahren sehr große Mengen von Kalkmilch erfordert. Die Herstellung der im Kalk-Kohlensäure-Extraktreinigungsverfahren verwendeten Kalkmilch und die Beseitigung des bei der Branntkalk-Herstellung entstehenden Abfalls sind jedoch relativ teuer. Auch sind die CO₂-Emissionen aus Kalkofen und Saftreinigungsanlage sehr hoch. Darüber hinaus lässt sich der bei dem Kalk-Kohlendioxid-Extraktreinigungsverfahren anfällende Carbokalk, der aus Kalk und abgetrennten Saft-Verunreinigungen besteht, lediglich als Düngemittel einsetzen.

Um dieses technische Problem zu umgehen, sind aus der EP 1 682 683 A Verfahren zur Extraktreinigung von Zuckerrüben-Rohsaft bekannt, umfassend die folgenden Verfahrensschritte, nämlich die Vorkalkung des Zuckerrüben-Rohsaftes durch Zugabe von Kalkmilch zur Fällung und/oder Koagulation von Nicht-Saccharosestoffen, also der eiweißhaltigen Fraktion, Zugabe mindestens eines Flockungshilfsmittels, Abtrennung des Koagulats vom Vorkalkungssaft unter Verwendung mindestens einer ersten Abtrennvorrichtung unter Erhalt eines klaren Vorkalkungssaftes, Hauptkalkung des nach Abtrennung des Koagulats erhaltenen klaren Vorkalkungssaftes durch Zugabe von Kalkmilch, und Durchführung einer ersten und ggf. zweiten Carbonatation.

Dieses Verfahren sieht also im Gegensatz zu den üblichen Verfahren vor, dass die während der Vorkalkung gefällte oder koagulierte eiweißhaltige Fraktion bereits nach der Vorkalkung abgetrennt wird und nicht erst nach der ersten und zweiten Carbonatation. Die derart erhaltene aufkonzentrierte eiweißhaltige Fraktion kann homogenisiert oder mit anderen Komponenten gemischt und homogenisiert werden. Die so erhaltene eiweißhaltige Fraktion weist allerdings noch einen vergleichsweise hohen und unerwünschten Feuchtegehalt auf, der die Stabilität dieses Produktes und damit auch die Verwendungsmöglichkeiten erheblich einschränkt. Das Produkt ist klebrig und inhomogen.

Der vorliegenden Erfindung liegt daher das technische Problem zugrunde, ein Verfahren und Produkte bereitzustellen, mit denen die vorgenannten Nachteile überwunden werden, insbesondere ein Verfahren bereitzustellen, mittels dessen aus einer eiweißhaltigen Fraktion eines Zuckerrüben-Rohsaftes ein homogenes, lagerstabiles und getrocknetes Produkt erhalten werden kann, welches sich für eine Vielzahl von Verwendungen, insbesondere kommerziell interessante Verwendungen, eignet.

Die vorliegende Erfindung löst das ihr zugrundeliegende technische Problem durch die Bereitstellung der Lehre insbesondere der Hauptansprüche. Insbesondere löst die vorliegende Erfindung das ihr zugrundeliegende technische Problem durch die Bereitstellung eines Verfahrens zur Herstellung eines Formkörpers einer eiweißhaltigen Fraktion aus Zuckerrüben-Rohsaft, umfassend die Verfahrensschritte a) Vorkalkung des Zuckerrüben-Rohsaftes zur Ausbildung von einem sich im erhaltenen Vorkalkungssaft bildenden Koagulat aus Nicht-Saccharosestoffen, b) Abtrennung des in Schritt a) erhaltenen Koagulats vom Vorkalkungssaft unter Verwendung mindestens einer ersten Abtrennvorrichtung zum Erhalt einer eiweißhaltigen Fraktion, c) Vermischung der in Schritt b) erhaltenen eiweißhaltigen Fraktion mit mindestens einem Träger und d) Formung des in Schritt c) erhaltenen Gemisches aus der eiweißhaltigen Fraktion und dem Träger in einer Formgebungsvorrichtung zum Erhalt des Formkörpers einer eiweißhaltigen Fraktion.

Die vorliegende Erfindung löst das ihr zugrundeliegende technische Problem auch durch die Bereitstellung eines Formkörpers, der mittels des erfindungsgemäßen Verfahrens erhältlich ist.

Die Erfindung sieht daher in vorteilhafter und überraschender Weise ein Verfahren vor, in dem in einem ersten Verfahrensschritt ein Zuckerrüben-Rohsaft vorgekalkt wird, dadurch ein Vorkalkungssaft entsteht und wobei sich dabei aus den im Zuckerrüben-Rohsaft enthaltenen Nicht-Saccharosestoffen ein Koagulat bildet, welches demgemäß in dem durch die Vorkalkung des Zuckerrüben-Rohsaftes entstandenen Vorkalkungssaft enthalten ist. Die Erfindung sieht in einem weiteren Verfahrensschritt vor, das Koagulat vom Vorkalkungssaft abzutrennen, wobei zu diesem Zweck eine erste Abtrennvorrichtung eingesetzt wird und wobei eine eiweißhaltige Fraktion in Form des Koagulats erhalten wird. In einem darauffolgenden Verfahrensschritt wird die erhaltene eiweißhaltige Fraktion mit mindestens einem Träger vermischt, insbesondere zu einem homogenen Gemisch vermischt, und in einem daran anschließenden Verfahrensschritt das erhaltene Gemisch aus der eiweißhaltigen Fraktion und dem Träger in einer Formgebungsvorrichtung einem Formprozess unterworfen wird, welcher zum Erhalt eines Formkörpers einer eiweißhaltigen Fraktion führt.

Durch die erfindungsgemäß vorgesehene Verwendung mindestens eines Trägers, welcher mit der in Verfahrensschritt b) erhaltenen eiweißhaltigen Fraktion vermischt wird, ist es in überraschender und vorteilhafter Weise möglich, ein Gemisch, insbesondere ein homogenes Gemisch, zu erhalten, welches sich in anschließenden Verfahrensschritten durch eine besonders gute Formgebuhgs- und Trocknungseignung auszeichnet und darüber hinaus eine besonders homogene Struktur aufweist. Die erfindungsgemäße Verfahrensweise erlaubt also den Erhalt von Formkörpern, insbesondere getrockneten Formkörpern, die eine besonders homogene Struktur und eine hohe Lagerstabilität zeigen. Die erhaltenen Produkte weisen darüber hinaus kaum oder keinerlei Klebrigkeit mehr auf.

Im Unterschied zu der erfindungsgemäßen Verfahrensweise, gemäß der die eiweißhaltige Fraktion geträgert und geformt wird, führt die Trocknung einer nicht geträgerten und nicht geformten eiweißhaltigen Fraktion aufgrund deren Klebrigkeit und der bei Trocknung sich entwickelnden Staubentwicklung zu einem erheblich erhöhten technischen und wirtschaftlichen Aufwand.

Im Zusammenhang mit der vorliegenden Erfindung wird unter "Zuckerrüben-Rohsaft" der Saft oder das wässrige zuckerhaltige Medium verstanden, der aus Rübenschnitzeln mittels gängiger Extraktions- oder Pressverfahren erhalten werden kann, insbesondere extrahiert wird, z. B. durch thermische Extraktionsverfahren wie Gegenstromextraktion bei etwa 65 bis 75°C im sogenannten Diffusionsverfahren, durch Elektroporation-gestützte Extraktionsverfahren oder Pressverfahren. Dieser zuckerreiche Zuckerrüben-Rohsaft enthält neben Zucker (Saccharose) noch verschiedene organische und anorganische Bestandteile der Rübe, die als Nicht-Saccharosestoffe bezeichnet werden.

Im Zusammenhang mit der vorliegenden Erfindung werden unter den im Zuckerrüben-Rohsaft enthaltenen "Nicht-Saccharosestoffen" hochmolekulare Substanzen wie Eiweißstoffe, Polysaccharide und Zellwandbestandteile sowie niedrigmolekulare organische Verbindungen wie anorganische oder organische Säuren, Aminosäuren und mineralische Stoffe verstanden. Bei den Zellwandbestandteilen handelt es sich insbesondere um Pektine, Lignin, Cellulose und Hemicellulose. Diese Stoffe liegen ebenso wie die Eiweißstoffe, zu denen neben Proteinen insbesondere Nucleoproteide oder Glykoproteine gehören, als hydrophile Makromoleküle in kolloidal-disperser Form vor. Bei den organischen Säuren handelt es sich beispielsweise um Lactate, Citrate, Pektinsäure und Oxalate. Bei den anorganischen Säuren handelt es sich insbesondere um Sulfate und Phosphate.

Unter einer "Vorkalkung" wird die Zugabe von Kalkmilch zu Zuckerrüben-Rohsaft oder Zuckerrübenextrakt verstanden, insbesondere bis zu etwa 0,1 bis 0,3 g CaO/100 ml Zuckerrüben-Rohsaft. Bei der Vorkalkung wird der Zuckerrüben-Rohsaft unter schonenden Bedingungen alkalisiert, wobei der pH-Wert des Zuckerrüben-Rohsaftes von etwa 6 auf etwa 11,5 angehoben wird. Die Vorkalkung dient zur Ausflockung von Nicht-Saccharosestoffen wie Pektin und Proteinen und zur Ausfällung schwerlöslicher Calciumsalze.

Unter "Kalkmilch" wird erfindungsgemäß insbesondere Calciumhydroxid verstanden, das bei der stark exothermen Reaktion von gebranntem Kalk (Calciumoxid) mit Wasser gebildet und bei der Vorkalkung und Hauptkalkung als Kalkungsmittel eingesetzt wird. Die Zugabe von Kalkmilch zum Zuckerrüben-Rohsaft in der Vorkalkung bewirkt die Fällung oder Koagulation von Nicht-Saccharosestoffen in Form eines Koagulates.

Im Zusammenhang mit der vorliegenden Erfindung werden die in Verfahrensschritt a) durch Vorkalkung und ggf. Zugabe von Flockungshilfsmittel in Form eines Koagulats abgetrennten Nicht-Saccharosestoffe als eiweißhaltige Fraktion bezeichnet. Diese ist alkalisch, aufgrund ihrer organischen Natur verderblich und thixotroph. Sie verhält sich wie ein Nicht-Newtonsches Fluid, insbesondere wird die Viskosität bei Scherbeanspruchung geringer und nach der Beanspruchung liegt wieder die Ausgangsviskosität vor.

Erfindungsgemäß werden unter einem "Koagulat" die aufgrund eines Flockungsprozesses gebildeten Zusammenballungen der im Zuckerrüben-Rohsaft vorhandenen Nicht-Saccharosestoffe verstanden. Das Koagulat umfasst insbesondere die unlöslichen oder schwer löslichen Salze, die sich durch Reaktion der Anionen von organischen oder anorganischen Säuren mit Calcium bilden, und die ausgefällten hochmolekularen Zuckerrüben-Rohsaft-Bestandteile, insbesondere mit hydrophilem Charakter, wie Eiweißstoffe, Polysaccharide und Zellwandbestandteile, die normalerweise im Zuckerrüben-Rohsaft kolloidal-dispers verteilt sind. Insbesondere liegen im Koagulat und damit in der eiweißhaltigen Fraktion Anionen wie Oxalat, Citrat, Phosphat, Sulfat und Pektinsäure ebenso wie Kolloide, insbesondere Pektin, Proteine, Cellulose und Hemicellulose vor. Der Flockungsprozess wird in eine Flocculation, bei der die Aggregation durch Adsorption brückenbildender Polymere erfolgt, und eine Koagulation, bei der die Aggregation durch Abbau beziehungsweise Reduzierung von Abstoßungskräften erfolgt, unterteilt. Die Flockungsgeschwindigkeit ist von der Temperatur, dem pH-Wert und der Art der Zugabe der Kalkmilch abhängig. Die Ausfällung einzelner Saft-Inhaltsstoffe, beispielsweise Anionen wie Oxalat, Phosphat, Citrat und Sulfat sowie Kolloide wie Pektin und Eiweiß, erfolgt in bestimmten pH-Bereichen, wobei innerhalb dieser pH-Bereiche eine Verdichtung des Niederschlages stattfindet. Der pH-Wert, bei dem eine Maximalmenge an Kolloiden ausgeflockt wird und die Fällung unlöslicher Kalksalze nahezu vollständig ist, wird als optimaler Flockungspunkt der Vorkalkung bezeichnet. Erfolgt die Ausfällung am optimalen Flockungspunkt, kommt es zu einer einheitlichen stabilen Ausflockung kolloidaldisperser hochmolekularer Saft-Bestandteile.

Die Fällung und Koagulation von Pektinen und Proteinen erfordert eine bestimmte temperaturabhängige Verweilzeit. Erfindungsgemäß ist vorgesehen, dass die Vorkalkung als kalte oder als warme Vorkalkung durchgeführt werden kann. Vorzugsweise wird die kalte Vorkalkung bei einer Vorkalkungstemperatur von etwa 38 bis 40°C durchgeführt. Erfindungsgemäß bevorzugt besteht jedoch auch die Möglichkeit, die Zugabe der Kalkmilch zum Zuckerrüben-Rohsaft als warme Vorkalkung bei einer Temperatur des Zuckerrüben-Rohsaftes von 55°C bis 75°C durchzuführen.

Die Zugabe von Kalkmilch zur Vorkalkung des Zuckerrüben-Rohsaftes erfolgt erfindungsgemäß bevorzugt als progressive Vorkalkung. Die progressive Vorkalkung durch eine allmähliche Steigerung der Alkalität beziehungsweise des pH-Wertes des Zuckerrüben-Rohsaftes erfolgt vorzugsweise durch langsamen Zulauf des Kalkmilch-Kalkungsmittel oder durch kleine unterbrochene Kalkmilch-Einzelzugaben, wobei insbesondere das pH-Optimum langsam durchlaufen wird.

Erfindungsgemäß bevorzugt ist vorgesehen, dass die progressive Alkalisierung des Zuckerrüben-Rohsaftes während der Vorkalkung im Gegenstrom durch einen bereits alkalisierten Zuckerrüben-Rohsaft, beispielsweise mittels des Schlammsaftkonzentrats aus den Carbonatationsstufen, erfolgen kann. Die progressive Alkalisierung im Gegenstrom bedeutet, dass der zurückgeführte Saft höherer Alkalität so schnell wie möglich mit einem Saft niedrigerer Alkalität vermischt wird, ohne dass sich innerhalb der Mischzone unterschiedliche Alkalitätsgradienten aufbauen können.

In einer weiteren bevorzugten Ausführungsform der vorliegenden Erfindung ist vorgesehen, dass im Anschluss an Verfahrensschritt a) in einem Verfahrensschritt a1) eine Flockung unter Zuhilfenahme, insbesondere unter Zugabe, mindestens eines Flockungshilfsmittels durchgeführt wird. Bevorzugt kann das Flockungshilfsmittel ein Polymer, z. b. ein Copolymer sein. Das Flockungshilfsmittel kann in besonders bevorzugter Ausführung ein polyanionisches Flockungshilfsmittel sein.

Gemäß der Erfindung ist in bevorzugter Ausführung vorgesehen, nach der Vorkalkung und vor dem Abtrennen des gebildeten Koagulates dem Vorkalkungssaft mindestens ein Copolymer, z. B. ein Copolymer aus Acrylamid und Natriumacrylat, insbesondere mit einer Molmasse von etwa 5 Mio. bis etwa 22 Mio. als polyanionisches Flockungshilfsmittel, vorzugsweise bis zu einer Konzentration von 1 bis 8 ppm, zuzusetzen.

Im Zusammenhang mit der vorliegenden Erfindung wird unter einem "Flockungshilfsmittel" ein Stoff verstanden, der das Zeta-Potential von Teilchen in kolloidalen Suspensionen so beeinflusst, dass sie zu Flocken aggregieren und beispielsweise nach Sedimentation aus dem System entfernt werden können. Flockungshilfsmittel müssen daher die elektrostatische Abstoßung der im Wasser meist negativ aufgeladenen Partikel überwinden. Erfindungsgemäß kann es sich bei den Flockungshilfsmitteln auch um Sedimentationsbeschleuniger handeln. Unter "Flockungshilfsmitteln" oder "Sedimentationsbeschleunigern" werden im Zusammenhang mit der vorliegenden Erfindung Verbindungen verstanden, die die Zusammenballung von Feststoffpartikeln zu größeren Einheiten oder Flocken bewirken. Durch die Zusammenballung als Flocken können sich die Feststoffe aufgrund ihrer größeren Masse bedeutend schneller absetzen. Gleichzeitig werden die Poren zwischen den einzelnen Teilchen vergrößert, so dass sich das Wasser, dass sich im abgesetzten Schlamm befindet, leicht durch Filtration oder Zentrifugation entfernen lässt. Die erfindungsgemäß bevorzugt eingesetzten polyanionischen Flockungshilfsmittel haben keinerlei koagulierende Wirkung, da sie nicht die Dispersion der Teilchen in der flüssigen Phase beeinflussen, sondern die Aggregation der Teilchen durch Absorption brückenbildender Polymere bewirken.

Bei den in bevorzugter Ausführungsform erfindungsgemäß als polyanionische Flockungshilfsmittel eingesetzten Copolymeren aus Acrylamid und Natriumacrylat handelt es sich um synthetische organische wasserlösliche Polyelektrolyte mit einem relativ großen Molekulargewicht von etwa 5 Mio. bis etwa 22 Mio. Diese Verbindungen sind mittel- bis starkionisch. Besonders bevorzugt werden als Flockungshilfsmittel die Produkte 2440 und 2540 (Fa. Stockhausen) sowie AN 945 (Fa. Clarflok) eingesetzt.

Erfindungsgemäß ist vorgesehen, nach einer ausreichenden Verweilzeit das während der Vorkalkung und gegebenenfalls unter Verwendung eines Flockungshilfsmittels gebildete Koagulat vom Vorkalkungssaft unter Verwendung einer ersten Abtrennvorrichtung abzutrennen. Unter einer "Abtrennvorrichtung" wird erfindungsgemäß insbesondere eine Vorrichtung zur Fest/Flüssig-Trennung verstanden. Der Fest/Flüssig-Trennung liegen mechanische Verfahren zugrunde, die auf der Ausnutzung von Schwerkraft, Zentrifugalkraft, Druck oder Vakuum beruhen. Zu den Fest/Flüssig-Trennverfahren, auf denen die Wirkungsweise einer erfindungsgemäß verwendeten Abtrennvorrichtung beruhen, gehören beispielsweise Dekantieren, Filtration, Sedimentation, Klären und Zentrifugation.

In einer bevorzugten Ausführungsform der Erfindung wird als erste Abtrennvorrichtung ein Dekanteur oder Dekanter, insbesondere ein statischer oder dynamischer Dekanter verwendet. Unter einem "Dekanter" oder "Dekanteur", insbesondere statischen oder dynamischen Dekanter, wird eine Vorrichtung oder ein Apparat verstanden, der zur mechanischen Entfernung von sedimentierten Stoffen aus einer Flüssigkeit nach dem Sedimentationsprinzip mit Hilfe der Schwerkraft dient.

Erfindungsgemäß ist insbesondere in einer bevorzugten Ausführung vorgesehen, dass bei Verwendung eines Dekanters als erster Abtrennvorrichtung dem Vorkalkungssaft 1 bis 3 ppm Flockungshilfsmittel zugesetzt werden.

In einer weiteren bevorzugten Ausführungsform der Erfindung wird als erste Abtrennvorrichtung eine Zentrifuge verwendet. Unter einer Zentrifuge wird eine Vorrichtung zum Trennen von Stoffgemischen durch Ausnutzung der Fliehkraft verstanden. Das im Inneren der rotierenden Zentrifuge befindliche Trenngut wird der sogenannten Zentrifugalkraft ausgesetzt. Vorzugsweise handelt es sich bei der als ersten Abtrennvorrichtung verwendeten Zentrifuge um eine Tellerzentrifuge oder um eine Dekanterzentrifuge. Unter einer "Tellerzentrifuge" oder einem "Tellerseparator" wird erfindungsgemäß eine Zentrifuge mit rotierenden konischen Schleuderblechen verstanden, an denen die schwereren Komponenten nach außen geleitet werden, während sich die leichteren Komponenten in Achsennähe sammeln, von wo sie nach außen abgeleitet werden. Unter einer "Dekantierzentrifuge" wird erfindungsgemäß eine meist konische und häufig kontinuierlich arbeitende Schneckenaustrag-Zentrifuge verstanden.

Erfindungsgemäß ist insbesondere vorgesehen, dass dem Vorkalkungssaft 1 bis 8 ppm Flockungshilfsmittel zugesetzt werden, z. B. bei Verwendung einer Tellerzentrifuge oder Dekanterzentrifuge als erster Abtrennvorrichtung.

In besonders bevorzugter Ausführungsform ist vorgesehen, dass die eiweißhaltige Fraktion soweit durch die erste Abtrennvorrichtung von flüssigem Medium befreit wird, dass diese einen Trockensubstanzgehalt von 30 bis 50 Gewichts-%, vorzugsweise 32 bis 48 Gewichts-%, vorzugsweise 35 bis 45 Gewichts-% und insbesondere 37 bis 40 Gewichts-% (Trockensubstanzgehalte werden in der vorliegenden Lehre, falls nicht anders angegeben, auf das Gewicht der Gesamtzusammensetzung bezogen) aufweist. In einer besonders bevorzugten Ausführungsform kann allerdings auch vorgesehen sein, dass der erwünschte Trockensubstanzgehalt nicht bereits nach der ersten Abtrennvorrichtung, sondern erst nach Durchlaufen einer zweiten Abtrennvorrichtung erzielt wird.

In einer weiteren bevorzugten Ausführungsform der Erfindung ist demgemäß vorgesehen, dass das unter Verwendung der ersten Abtrennvorrichtung vom klaren Vorkalkungssaft abgetrennte Koagulat in einem Verfahrensschritt b1) unter Verwendung mindestens einer zweiten Abtrennvorrichtung ggf. weiter aufkonzentriert und eingedickt wird.

Erfindungsgemäß bevorzugt erfolgt die weitere Eindickung und Aufkonzentrierung des Koagulates unter Verwendung mindestens einer zweiten Abtrennvorrichtung in Form von Membranfilterpresse(n) (vertikaler Kuchenaustrag) oder einem oder mehreren Pressfilterautomaten (horizontaler Kuchenaustrag). Im Zusammenhang mit der vorliegenden Erfindung wird unter einer "Membranfilterpresse" eine Filtervorrichtung verstanden, die entweder als Rahmenfilterpresse oder als Kammerfilterpresse ausgeführt ist.

Erfindungsgemäß bevorzugt kann das unter Verwendung der ersten Abtrennvorrichtung erhaltene Koagulat auch unter Verwendung von einer oder mehreren Dekanter-Zentrifugen, einem oder mehreren Vakuumdrehfiltern und/oder Tellerseparatoren als zweiter Abtrennvorrichtung weiter eingedickt und aufkonzentriert werden.

In einer besonders bevorzugten Ausführungsform ist vorgesehen, dass im Anschluss an Verfahrensschritt b) in einem Verfahrensschritt b1) das abgetrennte Koagulat unter Verwendung einer zweiten Abtrennvorrichtung auf einen Trockensubstanzgehalt von 30 bis 50 Gewicht-%, vorzugsweise 32 bis 48 Gewichts-%, vorzugsweise 35 bis 45 Gewichts-%, insbesondere 37 bis 40 Gewichts-%, aufkonzentriert wird.

Die durch die Abtrennungsschritte unter Verwendung der ersten und zweiten Abtrennvorrichtung erhaltenen klaren Vorkalkungssäfte werden bevorzugt vereinigt und dann einer Hauptkalkung unterworfen.

In einer bevorzugten Ausführungsform ist der in Verfahrensschritt c) eingesetzte Träger ein Träger, der in getrockneter Form, insbesondere getrockneter und zerkleinerter Form, insbesondere zermahlener oder granulierter Form, vorliegt.

In besonders vorteilhafter und erfindungsgemäß bevorzugter Weise kann der in Verfahrensschritt c) eingesetzte Träger in Form von getrockneten Zuckerrübenschnitzeln, NTT-Schnitzeln, Zyklon-Staub, Gluten oder getrockneter eiweißhaltiger Fraktion vorliegen.

Im Zusammenhang mit der vorliegenden Erfindung werden unter NTT-Schnitzeln melassierte Niedrigtemperaturtrockenschnitzel verstanden, insbesondere solche, die vor der Melassezugabe einen Trockensubstanzgehalt von 38 bis 44 Gewichts-% und nach der Melassezugabe einen Trockensubstanzgehalt von 42 bis 48 Gewichts-% aufweisen.

Im Zusammenhang mit der vorliegenden Erfindung werden unter Zyklonstaub die Partikel verstanden, die durch Kräfte der Massenträgheit aus einem Gasstrom radial abgeschieden werden.

Im Zusammenhang mit der vorliegenden Erfindung wird unter Gluten ein Stoffgemisch aus Proteinen verstanden, das in Getreidesamen vorkommt.

In bevorzugter Ausführungsform der vorliegenden Erfindung kann der in Verfahrensschritt c) eingesetzte Träger, insbesondere die getrockneten Zuckerrübenschnitzel oder die getrocknete eiweißhaltige Fraktion, in zerkleinerter, insbesondere zermahlener oder granulierter Form vorliegen.

Die Erfindung sieht daher in besonders bevorzugter Ausführungsform vor, dass als Träger eine getrocknete eiweißhaltige Fraktion verwendet wird, vorzugsweise eine solche, die mittels des erfindungsgemäßen Verfahrens selbst hergestellt wurde, insbesondere also ein erfindungsgemäß hergestellter, zerkleinerter ggf. zermahlener Formkörper ist.

In einer weiteren bevorzugten Ausführungsform der vorliegenden Erfindung ist vorgesehen, dass der Trockensubstanzgehalt des in Schritt c) eingesetzten Trägers 85 bis 99 Gewichts-%, insbesondere 88 bis 95 Gewichts-% beträgt.

In einer weiteren bevorzugten Ausführungsform ist vorgesehen, dass das Gewichtsverhältnis der eiweißhaltigen Fraktion zu dem mindestens einen Träger in Verfahrensschritt c) (2 bis 12):1, vorzugsweise (6 bis 12): 1, vorzugsweise (7 bis 11): 1, insbesondere (8 bis 10): 1, vorzugsweise 9:1 beträgt (Gewichtsverhältnisse werden in der vorliegenden Lehre, falls nicht anders angegeben, jeweils aus Gewichts-% Gesamtgewicht bestimmt).

In besonders bevorzugter Ausführungsform beträgt das Gewichtsverhältnis der eiweißhaltigen Fraktion zu getrockneten Zuckerrüben-schnitzeln, hier auch als Trockenschnitzel bezeichnet, (8 bis 10):1, insbesondere 9:1. In besonders bevorzugter Ausführungsform wird ein Gewichtsverhältnis von eiweißhaltiger Fraktion zu Trockenschnitzel eingesetzt, das zu einem Gesamttrockensubstanzgehalt der erhaltenen Mischung von 40 bis 60 Gewichts-%, insbesondere 40 bis 55 Gewichts-%, vorzugsweise 42 bis 55 Gewichts-%, insbesondere 43 bis 55 Gewichts-%, insbesondere 43 bis 53 Gewichts-%, vorzugsweise 42 bis 53 Gewichts-%, insbesondere 50 bis 55 Gewichts-%, vorzugsweise 52 bis 54 Gewichts-% führt.

In einer besonders bevorzugten Ausführungsform beträgt das Gewichtsverhältnis der eiweißhaltigen Fraktion zu den NTT-Schnitzeln (4 bis 8):1, insbesondere (5 bis 6):1. In besonders bevorzugter Ausführungsform wird ein Gewichtsverhältnis von eiweißhaltiger Fraktion zu NTT-Schnitzeln eingesetzt, das zu einem Gesamttrockensubstanzgehalt der erhaltenen Mischung von 40 bis 60 Gewichts-%, insbesondere 40 bis 55 Gewichts-%, vorzugsweise 40 bis 50 Gewichts-%, insbesondere 40 bis 45 Gewichts-% führt.

In weiteren bevorzugten Ausführungsform ist vorgesehen, dass das Gewichtsverhältnis von eiweißhaltiger Fraktion zu Zyklonstaub (8 bis 10):1, insbesondere 9:1 beträgt. In besonders bevorzugter Ausführungsform wird ein Gewichtsverhältnis von eiweißhaltiger Fraktion zu Zyklon-Staub eingesetzt, das zu einem Gesamttrockensubstanzgehalt der erhaltenen Mischung von 40 bis 60 Gewichts-%, insbesondere 40 bis 55 Gewichts-%, vorzugsweise 42 bis 55 Gewichts-%, insbesondere 43 bis 55 Gewichts-%, insbesondere 43 bis 53 Gewichts-%, vorzugsweise 42 bis 53 Gewichts-%, insbesondere 50 bis 55 Gewichts-%, vorzugsweise 52 bis 54 Gewichts-% führt.

In einer weiteren bevorzugten Ausführungsform der vorliegenden Erfindung ist vorgesehen, dass das Gewichtsverhältnis der eiweißhaltigen Fraktion zu der getrockneten eiweißhaltigen Fraktion (2 bis 4):1, vorzugsweise 3:1 beträgt. In besonders bevorzugter Ausführungsform wird ein Gewichtsverhältnis von eiweißhaltiger Fraktion zu getrockneter eiweißhaltiger Fraktion eingesetzt, das zu einem Gesamttrockensubstanzgehalt der erhaltenen Mischung von 40 bis 60 Gewichts-%, insbesondere 40 bis 55 Gewichts-%, vorzugsweise 42 bis 55 Gewichts-%, insbesondere 43 bis 55 Gewichts-%, insbesondere 43 bis 53 Gewichts-%, vorzugsweise 42 bis 53 Gewichts-%, insbesondere 50 bis 55 Gewichts-%, vorzugsweise 52 bis 54 Gewichts-% führt.

In besonders bevorzugter Ausführungsform ist vorgesehen, dass die Partikelgröße des eingesetzten Trägers, insbesondere der Trockenschnitzel, maximal 3 mm, insbesondere 0,5 bis 3 mm beträgt. In einer weiteren bevorzugten Ausführungsform ist vorgesehen, dass in der in Verfahrensschritt c) hergestellten Mischung aus Träger, insbesondere Trockenschnitzel, und eiweißhaltiger Fraktion nicht mehr als 20 Gewichts-% Trockenschnitzel in getrockneter und zermahlener Form vorhanden ist.

In einer besonders bevorzugten Ausführungsform ist vorgesehen, dass die Partikelgröße des eingesetzten Trägers, insbesondere der getrockneten und gemahlenen eiweißhaltigen Fraktion maximal 1,5 mm, insbesondere 0,5 bis 1,5 mm beträgt.

In einer weiteren bevorzugten Ausführungsform ist vorgesehen, dass der Trockensubstanzgehalt der in Verfahrensschritt c) erhaltenen Mischung aus eiweißhaltiger Fraktion mit dem mindestens einen Träger 40 bis 60 Gewichts-%, insbesondere 40 bis 55 Gewichts-%, vorzugsweise 42 bis 55 Gewichts-%, insbesondere 43 bis 55 Gewichts-%, insbesondere 43 bis 53 Gewichts-%, vorzugsweise 42 bis 53 Gewichts-%, insbesondere 50 bis 55 Gewichts-%, vorzugsweise 52 bis 54 Gewichts-% beträgt.

In einer besonders vorteilhaften und bevorzugten Ausführungsform der vorliegenden Erfindung ist die in Verfahrensschritt d) eingesetzte Formgebungsvorrichtung eine Vorrichtung zum Pelletieren, eine Vorrichtung zum Granulieren oder eine Vorrichtung zum Extrudieren, insbesondere eine Pelletiermaschine, eine Pelletpresse oder eine Granulierschnecke. Demgemäß wird ein Formkörper in Form von Pellets, Granulaten, Strängen oder Extrudaten erhalten.

In einer weiteren bevorzugten Ausführungsform der vorliegenden Erfindung ist vorgesehen, dass im Anschluss an Verfahrensschritt d) in einem Verfahrensschritt d1) eine Trocknung des erhaltenen Formkörpers einer eiweißhaltigen Fraktion durchgeführt wird. Die Trocknung wird in bevorzugter Ausführungsform der vorliegenden Erfindung als mechanische Trocknung, thermische Trocknung oder mechanische und thermische Trocknung durchgeführt. Die mechanische Trocknung sieht in bevorzugter Ausführungsform den Einsatz von Dekanter-Zentrifugen vor. In besonders bevorzugter Ausführungsform wird die thermische Trocknung in Verfahrensschritt d1) bei 60 bis 90 °C, vorzugsweise 60 bis 80 °C, vorzugsweise 65 bis 85 °C, insbesondere 70 bis 80 °C durchgeführt. In einer besonders bevorzugten Ausführungsform wird die Trocknung in Verfahrensschritt d1) bis zu einem Trockensubstanzgehalt des Formkörpers einer eiweißhaltigen Fraktion von mindestens 88 Gewichts-%, mindestens 90 Gewichts-%, mindestens 92 Gewichts-%, mindestens 93 Gewichts-% mindestens 95 Gewichts-%, mindestens 99 Gewichts-% durchgeführt.

In einer weiteren bevorzugten Ausführungsform der vorliegenden Erfindung ist vorgesehen, dass der erhaltene Formkörper in einem Verfahrensschritt d) oder d1) im nachfolgenden Verfahrensschritt d2) zerkleinert, z. B. zermahlen oder granuliert, wird. In bevorzugter Ausführungsform wird ein Pulver oder Granulat erhalten.

Die hergestellten Formkörper weisen in besonders vorteilhafter Weise eine sehr homogene Struktur auf, sind lagerstabil und nicht klebrig.

In einer weiteren bevorzugten Ausführungsform der vorliegenden Erfindung ist vorgesehen, dass der mindestens eine in Verfahrensschritt c) eingesetzte Träger der in Verfahrensschritt d) oder im nachfolgenden Verfahrensschritt d1) oder d2) erhaltene Formkörper, insbesondere in getrockneter und zerkleinerter, z. B. gemahlener, Form ist. Die Erfindung sieht demgemäß in einer besonders bevorzugten Ausführungsform eine Zurückführung oder Recylisierung von Anteilen der erhaltenen Formkörper vor, wobei sich diese, insbesondere in zerkleinerter und getrockneter Form, in besonders vorteilhafter Weise als Träger für das Mischen mit einer aus Zuckerrüben-Rohsaft erhaltenen eiweißhaltigen Fraktion eignen.

Die Erfindung betrifft in einer weiteren Ausführungsform auch Formkörper, die mittels des erfindungsgemäßen Verfahrens erhältlich sind. Derartige Formkörper zeichnen sich durch ihren besonderen Gehalt an eiweißhaltiger Fraktion, insbesondere Nicht-SaccharoseStoffen, aus und sind darüber hinaus durch eine besonders stabile und homogene Struktur gekennzeichnet, die wenig bis gar nicht klebrig ist.

Erfindungsgemäß hergestellte Formkörper eignen sich insbesondere für die Silierung, als Tierfuttermittel, als Fermentationsmedium, insbesondere für Pilze, Bakterien oder sonstige Mikroorganismen, als Hilfsmittel für die Verbrennung, als Brennstoff selbst, als Bodenverbesserer oder Düngemittel. Zur Verwendung als Futtermittel wird das erfindungsgemäße Nicht-Saccharosestoff-Konzentrat vorzugsweise zerkleinert, mit Melasse gemischt und getrocknet und dann als Futtermittel eingesetzt.

Weitere vorteilhafte Ausgestaltungen ergeben sich aus den Unteransprüchen.

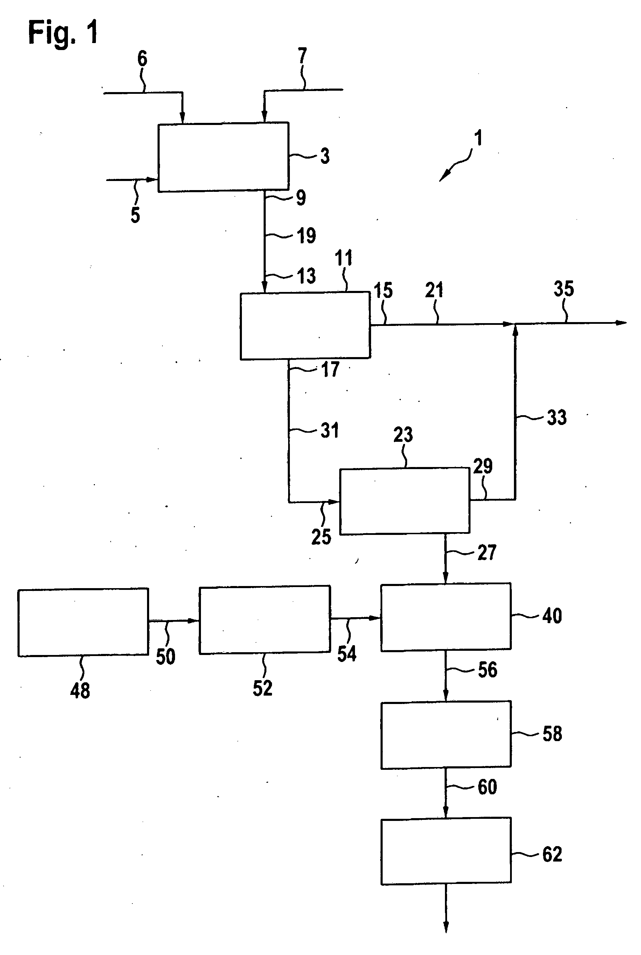

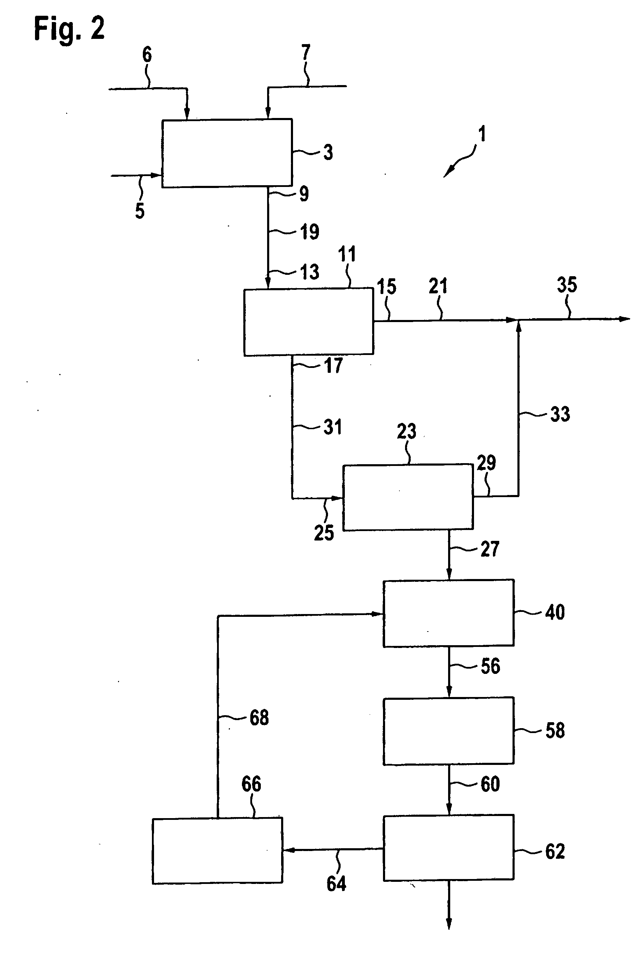

Die Erfindung wird durch die Figuren 1 und 2 und das Beispiel näher erläutert.

Figur 1 zeigt in schematischer Form eine Ausführungsform der erfindungsgemäßen Vorrichtung zur Gewinnung eines Formkörpers aus einer eiweißhaltigen Fraktion aus Zuckerrüben-Rohsaft. Die erfindungsgemäße Vorrichtung 1 umfasst einen Behälter 3 zur Kalkmilch-Behandlung des Zuckerrüben-Rohsaftes und eine damit verbundene erste Abtrennvorrichtung 11 zur Abtrennung des bei der Vorkalkung im Behälter 3 erhaltenen Koagulates vom Vorkalkungssaft. Der Behälter 3 weist neben dem Einlauf 5 für den Rohsaft und dem Einlauf 7 für die Kalkmilch noch einen Einlauf 6 zum Eintrag von Schlammsaftkonzentrat, das aus der nicht dargestellten ersten und zweiten Carbonatation erhalten wird, auf. Der Behälter 3 weist ebenfalls einen Ablauf 9 zum Austrag des erhaltenen Vorkalkungssaftes auf. Der Ablauf 9 des Vorkalkungsbehälters 3 ist über eine Leitung 19 mit dem Einlauf 13 der ersten Abtrennrichtung 11 verbunden, so dass der Vorkalkungssaft aus dem Vorkalkungsbehälter 3 in die erste Abtrennvorrichtung 11 gelangt. In der ersten Abtrennvorrichtung 11 wird das im Vorkalkungssaft gebildete Koagulat als Koagulatschlamm vom klaren Vorkalkungssaft abgetrennt. Der geklärte Vorkalkungssaft wird über den Ablauf 15 aus der ersten Abtrennvorrichtung 11 heraustransportiert. Der abgetrennte Koagulatschlamm wird über den Ablauf 17 aus der ersten Abtrennvorrichtung 11 heraustransportiert. Der Ablauf 17 ist über die Leitung 31 mit dem Einlauf 25 der optional vorhandenen zweiten Abtrennvorrichtung 23 verbunden, so dass der Koagulatschlamm aus der ersten Abtrennvorrichtung 11 über den Ablauf 17, die Leitung 31 und den Einlauf 25 in die zweite Abtrennrichtung 23 gelangt. In der zweiten Abtrennvorrichtung 23 wird der eingetragene Koagulatschlamm aufkonzentriert, wobei ein aufkonzentrierter Koagulatschlamm mit einer Trockensubstanz von zum Beispiel 40 Gewichts-% und ein weiterer klarer Vorkalkungssaft erhalten werden. Der aufkonzentrierte Koagulatschlamm, also die eiweißhaltige Fraktion, wird über die Leitung 27 aus der zweiten Abtrennvorrichtung 23 in die Mischvorrichtung 40 transportiert. Aus dem Behälter 48, in dem sich getrocknete Rübenschnitzel befinden, werden diese über eine Fördervorrichtung 50 in eine Zerkleinerungsvorrichtung 52 eingebracht, in der sie zu einer Partikelgröße von zum Beispiel kleiner 3 mm mit einer Trockenmasse von zum Beispiel 90 Gewichts-% zermahlen werden. Die zermahlenen und getrockneten Schnitzel werden anschließend über die Fördervorrichtung 54 in die Mischvorrichtung 40 eingeleitet und dort homogen und innig mit der eiweißhaltigen Fraktion vermischt. Die erhaltene Mischung mit einem Trockensubstanzgehalt von zum Beispiel 44 bis 45 Gewichts-% wird über die Fördervorrichtung 56 in die Formgebungsvorrichtung 58, die als Pelletiermaschine ausgeführt ist, eingebracht und Pellets mit einem Trockensubstanzgehalt von zum Beispiel 44 bis 45 Gewichts-% erhalten. Anschließend werden die Pellets in einer Trocknungsvorrichtung 62, in die sie über eine Fördervorrichtung 60 transportiert wurden, auf einen Trockensubstanzgehalt von zum Beispiel 89 Gewichts-% getrocknet.

Der in der zweiten Abtrennvorrichtung 23 gebildete klare Vorkalkungssaft wird über den Ablauf 29 aus der zweiten Abtrennvorrichtung 23 heraustransportiert und über die damit verbundene Leitung 33 der Leitung 21, in der der klare Vorkalkungssaft aus der ersten Abtrennvorrichtung 11 transportiert wird, zugeführt. Das Gemisch der klaren Vorkalkungssäfte aus der ersten Abtrennvorrichtung 11 und der zweiten Abtrennvorrichtung 23 wird dann gemeinsam über die Leitung 35 und über nicht dargestellte Wärmetauscher zur Hauptkalkung geleitet.

Die Figur 2 entspricht im Wesentlichen der Figur 1, wobei jedoch anstelle von Vorrichtungen zur Zuführung von getrockneten und gemahlenen Zuckerrübenschnitzeln Vorrichtungen zur Recyclisierung getrockneter eiweißhaltiger Fraktion, die anstelle der getrockneten und gemahlenen Zuckerrübenschnitzel als Träger verwendet wird, vorhanden sind. Dementsprechend wird in der Mischvorrichtung 40 eine Mischung von aus der optional vorhandenen zweiten Abtrennvorrichtung 23 stammender eiweißhaltiger Fraktion mit einem Trockensubstanzgehalt von zum Beispiel 40 % und aus diesem Verfahren stammender, getrockneter und zermahlener eiweißhaltiger Fraktion mit einem Trockensubstanzgehalt von zum Beispiel 89 Gewichts-% hergestellt. Nach Mischung dieser beiden Komponenten werden diese mit einem Trockensubstanzgehalt von zum Beispiel 49 bis 59 Gewichts-% über die Fördervorrichtung 56 in die Formgebungsvorrichtung 58, insbesondere eine Vorrichtung zum Pelletieren, eingebracht, über die Fördervorrichtung 60 in eine Trocknungsvorrichtung 62 transportiert und dort zu einem Trockensubstanzgehalt von zum Beispiel 89 % getrocknet. Ein Teil der so erhaltenen getrockneten Pellets wird über eine Fördervorrichtung 64 in eine Zerkleinerungsvorrichtung 66 eingebracht, dort zu einer Partikelgröße von zum Beispiel kleiner 1,5 mm zerkleinert und anschließend über eine Fördervorrichtung 68 als Träger in die Mischvorrichtung 40 recyclisiert. Der andere Teil der Pellets kann seiner vorteilhaften Endverwendung zugeführt werden.

### Beispiel

### Abtrennung von Vorkalkungskoagulat

### Vorkalkung

30 kg Rohsaft werden in einen beheizbaren Behälter 3 mit einem Volumen von 50 I, der ein Rührwerk, ein CO₂-Einleitungsrohr und eine pH-Elektrode aufweist, gegeben und auf 55 °C erhitzt. Über einen Zeitraum von 20 min wird dem Rohsaft stufenweise Kalkmilch bis zum pH-Wert des optimalen Flockungspunktes der Vorkalkung (ca. 0,1 bis 0,3 g CaO/100 ml Saft) zugesetzt. Zur Erhöhung der Absetzgeschwindigkeit wird anschließend ein polyanionisches Flockungshilfsmittel (Praestol 2540 TR) zugesetzt. Der gebildete klare Überstand (Klarsaft) wird in einen Vorratsbehälter abgezogen. Das gebildete Schlammsaftkonzentrat wird abgelassen und einer ersten und hier einzigen Abtrennvorrichtung 11, zum Beispiel eine Membranfilterpresse oder einer Dekanterzentrifuge, zugeführt, in der die eiweißhaltige Fraktion erhalten wird.

Die eiweißhaltige Fraktion hat, wenn sie frisch abgetrennt wurde, eine Temperatur von rund 50°C. Der pH-Wert liegt im basischen Bereich bei etwa 11. Da es sich bei dem Produkt um eine organische Verbindung handelt, ist es leicht verderblich und muss, falls man es nicht gleich weiterverarbeitet, gekühlt gelagert werden. Der Trockensubstanzgehalt (TS) der Fraktion liegt bei 35 bis 41%. Die eiweißhaltige Fraktion weist einen Zuckergehalt von 8 bis 10% auf.

Weitere Inhaltstoffe sind Phosphor (P), Calcium (Ca), Natrium (Na), Kalium (K), Blei (Pb), Zink (Zn), Magnesium (Mg) und Kolloide wie z.B. Pektin, Protein, Cellulose und Hemicellulose. Die eiweißhaltige Fraktion zeigt bei Scherbeanspruchung im Extruder ein thixotropes Verhalten, es handelt sich also um ein Nicht-Newtonsches Fluid. Bei Nicht-Newtonschen Fluiden baut die Viskosität mit der Zeit bei konstanter Scherbeanspruchung ab (ein Newtonsches Fluid verhält sich proportional zur Schubspannung, es ist unabhängig von der Geschwindigkeit). Wenn die Beanspruchung ausgesetzt wird, baut das Medium seine Ausgangsviskosität wieder auf.

Das Mischungsverhältnis von getrockneter eiweißhaltiger Fraktion, Rübenschnitzeln (Trockenschnitzel) oder Zyklon-Staub zu der aus der ersten Abtrennvorrichtung 11 erhaltenen eiweißhaltigen Fraktion wird auf 5, 10 und 15% festgelegt.

Vor Mischung mit der eiweißhaltigen Fraktion werden die als Träger eingesetzten Trockenschnitzel mit einem Sieb, welches eine Maschenweite von 5x5 mm hat, klassiert, da diese teilweise über 3 cm groß sind. Das Klassieren führt zu einer gleichmäßigeren Mischung.

Vorzugsweise liegt die Partikelgröße der Trockenschnitzel bei etwa 3 mm.

Um die Komponenten zu mischen, steht ein Rührer 40, welcher an ein Rührwerk angeschlossen ist, bereit. Die eiweißhaltige Fraktion und die Trockenschnitzel (aber auch Zyklon-Staub oder trockene eiweißhaltige Fraktion) werden in den Behälter 40 gegeben und anschließend für circa 5 Minuten durchmischt werden.

Es wurden Mischungen hergestellt aus 90 Gewichts-% eiweißhaltiger Fraktion (Trockensubstanzgehalt 39,5 Gewichts%) und 10 Gewichts-% Trockenschnitzel (92,0 Gewichts-% Trockensubstanz) mit einem Trockensubstanzgehalt von 44,8 Gewichts-%.

Eine zweite Mischung wurde hergestellt aus 90 Gewichts-% eiweißhaltiger Fraktion (38,0 Gewichts-% Trockensubstanz) und 10 Gewichts-% Zyklon-Staub (95,7 Gewichts-% Trockensubstanz) und wies einen Trockensubstanzgehalt von 43,8 Gewichts-% auf.

Eine dritte Mischung wurde aus 75 Gewichts-% eiweißhaltiger Fraktion (Gesamttrockensubstanzgehalt 38,0 Gewichts-%) und 25 Gewichts-% getrockneter eiweißhaltiger Fraktion (95 Gewichts-% Trockensubstanz) aus dem erfindungsgemäßen Verfahren hergestellt und wies einen Trockensubstanzgehalt von 52,3 Gewichts-% auf.

Eine vierte Mischung wurde aus 90 Gewichts-% eiweißhaltiger Fraktion und 10 Gewichts-% Zyklonstaub (95 Gewichts-% Trockensubstanz) hergestellt. Eine fünfte Mischung wurde aus 90 Gewichts-% eiweißhaltiger Fraktion und 10 Gewichts-% Trockenschnitzel (93,8 Gewichts-% Trockensubstanz) hergestellt. Eine sechste Mischung wurde aus 70 Gewichts-% eiweißhaltiger Fraktion und 30 Gewichts-% getrockneter eiweißhaltiger Fraktion (92,8 Gewichts-% Trockensubstanz) aus dem erfindungsgemäßen Verfahren hergestellt. Der in Salzsäure (25 %) unlösliche Anteil, also der mineralische Ascheanteil enthaltend Natrium, Kalium, Schwermetalle, Chlorid, Sulfat und Sand (Silicat), betrug für die vierte Mischung 11,33 g/100 g TS (Trockensubstanz), für die fünfte Mischung 9,56 g/100 g TS (Trockensubstanz) und für die sechste Mischung 8,59 g/100 g TS (Trockensubstanz). Einen für die Verwendung z. B. als Futtermittel besonders niedrigen Ascheanteil weisen die fünfte und sechste Mischung mit Trockenschnitzeln bzw. getrockneter eiweißhaltiger Fraktion auf.

Folgende weitere Mischungen gemäß der Tabelle wurden hergestellt und charakterisiert:

**Tabelle**

| Mischung | Durchmesser (mm) | Dichte (t/m³) |
|---|---|---|
| eiweißhaltige Fraktion | 5 | 1,352 |
| eiweißhaltige Fraktion | 17 | 1,140 |
| eiweißhaftige Fraktion | 25 | 1,086 |
| eiweißhaltige Fraktion und Trockenschnitzel (10%) | 5 | 1,076 |
| eiweißhaltige Fraktion und Zyklonstaub (5%) | 5 | 1,133 |
| eiweißhaltige Fraktion und Zyklonstaub (10%) | 5 | 1,132 |
| eiweißhaltige Fraktion und Zyklonstaub (15%) | 5 | 1,148 |

### Dichten von Pellets verschiedener Mischung

Die erhaltenen Mischungen werden dann mit Hilfe eines Extruders zu Pellets geformt. Im Anschluss daran werden die erhaltenen Pellets in einem Trockenschrank getrocknet.

Die aus den vorgenannten Mischungen erhaltenen Pellets zeigen eine sehr homogene Struktur, gute Trocknungs- und Formgebungseigenschaften und sind, wie Lagerungstests zeigen, sehr lagerstabil und wenig bis gar nicht klebrig.

## Patentansprüche

1. Verfahren zur Herstellung eines Formkörpers einer eiweißhaltigen Fraktion aus Zuckerrüben-Rohsaft, umfassend die Verfahrensschritte:
a) Vorkalkung des Zuckerrüben-Rohsaftes zur Ausbildung von einem sich im erhaltenen Vorkalkungssaft bildenden Koagulat aus Nicht-Saccharosestoffen,
b) Abtrennung des Koagulats vom Vorkalkungssaft unter Verwendung mindestens einer ersten Abtrennvorrichtung zum Erhalt einer eiweißhaltigen Fraktion,
c) Vermischung der eiweißhaltigen Fraktion mit mindestens einem Träger und
d) Formung des erhaltenen Gemisches aus der eiweißhaltigen Fraktion und dem Träger in einer Formgebungsvorrichtung zum Erhalt des Formkörpers einer eiweißhaltigen Fraktion.

2. Verfahren nach Anspruch 1, wobei im Anschluss an Verfahrensschritt a) in einem Verfahrensschritt a1) eine Flockung unter Zugabe mindestens eines Flockungshilfsmittels durchgeführt wird.

3. Verfahren nach einem der vorhergehenden Ansprüchen, wobei im Anschluss an Verfahrensschritt b) in einem Verfahrensschritt b1) das abgetrennte Koagulat unter Verwendung einer zweiten Abtrennvorrichtung auf einen Trockensubstanzgehalt von 35 bis 45 Gewichts-% aufkonzentriert wird.

4. Verfahren nach einem der vorherigen Ansprüche, wobei der mindestens eine in Verfahrensschritt c) eingesetzte Träger getrocknete Zuckerrübenschnitzel, NTT-Schnitzel, Zyklon-Staub, Gluten oder getrocknete eiweißhaltige Fraktion ist.

5. Verfahren nach einem der vorhergehenden Ansprüche, wobei der Trockensubstanzgehalt des mindestens einen Trägers 85 bis 99 Gew.-% beträgt.

6. Verfahren nach einem der vorhergehenden Ansprüche, wobei das Gewichtsverhältnis der eiweißhaltigen Fraktion zu dem mindestens einen Träger in Verfahrensschritt c) (2 bis 12): 1 beträgt (jeweils Gew.-% Gesamtgewicht).

7. Verfahren nach einem der vorhergehenden Ansprüche, wobei der Trockensubstanzgehalt der in Verfahrensschritt c) erhaltenen Mischung 40 bis 55 Gew.-% beträgt.

8. Verfahren nach einem der vorhergehenden Ansprüche, wobei im Anschluss an Verfahrensschritt d) in einem Verfahrensschritt d1) eine Trocknung des erhaltenen Formkörpers einer eiweißhaltigen Fraktion durchgeführt wird.

9. Verfahren nach einem der vorhergehenden Ansprüche, wobei die Trocknung in Verfahrensschritt d1) bei 60 bis 90°C durchgeführt wird.

10. Verfahren nach einem der vorhergehenden Ansprüche, wobei die Trocknung in Verfahrensschritt d1) bis zu einem Trockensubstanzanteil des Formkörpers einer eiweißhaltigen Fraktion von mindestens 88 Gew.-% erfolgt.

11. Verfahren nach einem der vorhergehenden Ansprüche, wobei der erhaltene Formkörper in einem Verfahrensschritt d) oder d1) nachfolgenden Verfahrensschritt d2) zerkleinert wird.

12. Verfahren nach einem der vorhergehenden Ansprüche, wobei der mindestens eine in Verfahrensschritt c) eingesetzteTräger der in Verfahrensschritt d) oder einem nachfolgenden Verfahrensschritt d1) oder d2) erhaltene Formkörper ist.

13. Verfahren nach einem der vorhergehenden Ansprüche, wobei die Formgebungsvorrichtung eine Vorrichtung zum Pelletieren, eine Vorrichtung zum Granulieren oder eine Vorrichtung zum Extrudieren ist.

14. Formkörper, erhältlich nach einem der Verfahren gemäß der Ansprüche 1 bis 13.

15. Verwendung des Formkörpers nach Anspruch 14 für die Silierung, als Tierfuttermittel, Fermentationsmedium, Verbrennungshilfsmittel, Brennstoff, Bodenverbesserer oder Düngemittel.

## Claims

1. A method for producing a molded product of a protein-containing fraction from raw sugar beet juice, comprising the method steps:
a) pre-liming the raw sugar beet juice in order to form a coagulum of non-sucrose substances forming in the obtained pre-liming juice,
b) separating the coagulum from the pre-liming juice using at least one first separation device in order to obtain a protein-containing fraction,
c) blending the protein-containing fraction with at least one carrier, and
d) molding the obtained mixture comprising the protein-containing fraction and the carrier in a molding device to obtain the molded product of a protein-containing fraction.

2. The method according to claim 1, wherein subsequent to method step a), a flocculation is carried out in a method step a1) by adding at least one flocculant.

3. The method according to any one of the preceding claims, wherein subsequent to the method step b), the separated coagulum is concentrated in a method step b1) to a dry matter content of from 35 to 45 % by weight by using a second separation device.

4. The method according to any one of the preceding claims, wherein the at least one carrier used in method step c) is dried sugar beet slices, NTT slices, cyclone dust, gluten or dried protein-containing fraction.

5. The method according to any one of the preceding claims, wherein the dry matter content of the at least one carrier is 85 to 99% by weight.

6. The method according to any one of the preceding claims, wherein the weight ratio of the protein-containing fraction to the at least one carrier in method step c) is (2 to 12):1 (in each case percent by weight of the total weight).

7. The method according to any one of the preceding claims, wherein the dry matter content of the mixture obtained in method step c) is 40 to 55% by weight.

8. The method according to any one of the preceding claims, wherein subsequent to the method step d), drying the obtained molded product of a protein-containing fraction is carried out in a method step d1).

9. The method according to any one of the preceding claims, wherein drying in method step d1) is carried out at 60 to 90°C.

10. The method according to any one of the preceding claims, wherein drying in method step d1) is carried out up to a dry matter content of the molded product of a protein-containing fraction of at least 88% by weight.

11. The method according to any one of the preceding claims, wherein the obtained molded product is comminuted in a method step d2) that follows the method step d) or d1).

12. The method according to any one of the preceding claims, wherein the at least one carrier used in method step c) is the molded product obtained in method step d) or in a subsequent method step d1) or d2).

13. The method according to any one of the preceding claims, wherein the molding device is a device for pelleting, a device for granulating or a device for extruding.

14. A molded product, obtainable according to any one of the methods according to claims 1 to 13.

15. A use of the molded product according to claim 14 for ensiling, as animal feed, fermentation medium, combustion aid, fuel, soil conditioner or fertilizer.

## Revendications

1. Procédé pour la fabrication d'un corps moulé d'une fraction contenant de la protéine à partir de jus brut de betteraves à sucre, le procédé comprenant les étapes suivantes :
a) préchaulage du jus brut de betteraves à sucre pour former, dans le jus de préchaulage obtenu, une coagulum des substances non-saccharose,
b) séparation de la coagulum du jus de préchaulage en utilisant au moins un premier dispositif de séparation, pour obtenir une fraction contenant de la protéine,
c) mélange de la fraction contenant de la protéine avec au moins un support et
d) moulage du mélange obtenu de la fraction contenant de la protéine et le support dans un dispositif de moulage pour obtenir le corps moulé d'une fraction contenant de la protéine.

2. Procédé selon la revendication 1, dans lequel une floculation par ajoutage d'au moins un adjuvant de floculation s'effectue dans une étape de procédé a1) suivant l'étape de procédé a).

3. Procédé selon l'une quelconque des revendications précédentes, dans lequel la coagulum séparée est concentrée, dans une étape de procédé b1) suivant l'étape de procédé b), en utilisant un second dispositif de séparation afin d'obtenir un taux de matière sèche de 35 à 45 % en poids.

4. Procédé selon l'une quelconque des revendications précédentes, dans lequel le au moins un support utilisé dans l'étape de procédé c) consiste en cossettes de betteraves séchées, cossettes séchées à basse température, poussière de cyclone, gluten ou fraction séchée contenant de la protéine.

5. Procédé selon l'une quelconque des revendications précédentes, dans lequel le taux de matière sèche de l'au moins un support est de 85 à 99 % en poids.

6. Procédé selon l'une quelconque des revendications précédentes, dans lequel le rapport en poids de la fraction contenant de la protéine et le au moins un support dans l'étape de procédé c) est de (2 à 12) : 1 (respectivement en % en poids du poids total).

7. Procédé selon l'une quelconque des revendications précédentes, dans lequel le taux de matière sèche du mélange obtenu dans l'étape de procédé c) est de 40 à 55 % en poids.

8. Procédé selon l'une quelconque des revendications précédentes, dans lequel un séchage du corps moulé obtenu d'une fraction contenant de la protéine s'effectue dans une étape de procédé d1) suivant à l'étape de procédé d).

9. Procédé selon l'une quelconque des revendications précédentes, dans lequel le séchage dans l'étape de procédé d1) s'effectue à une température de 60 à 90 °C.

10. Procédé selon l'une quelconque des revendications précédentes, dans lequel le séchage dans l'étape de procédé d1) s'effectue jusqu'à un taux de matière sèche du corps moulé d'une fraction contenant de la protéine d'au moins 88 % en poids.

11. Procédé selon l'une quelconque des revendications précédentes, dans lequel le corps moulé obtenu est fractionné dans une étape de procédé d2) suivant l'étape de procédé d) ou d1).

12. Procédé selon l'une quelconque des revendications précédentes, dans lequel le moins un support utilisé dans l'étape de procédé c) est le corps moulé obtenu dans l'étape de procédé d) ou dans une étape de procédé d1) ou d2) suivante.

13. Procédé selon l'une quelconque des revendications précédentes, dans lequel le dispositif de moulage est un dispositif de pelletisation, un dispositif de granulation ou un dispositif d'extrusion.

14. Corps moulé obtenable par le procédé selon les revendications 1 à 13.

15. Utilisation du corps moulé selon la revendication 14 pour l'ensilage, en tant qu'aliment pour animaux, milieu de fermentation, adjuvant de combustion, combustible, améliorant du sol ou fertilisant.
